# FASCICULE DE BREVET EUROPEEN

(11) **EP 3 320 291 B1**
(45) Date de publication et mention de la délivrance du brevet: **13.11.2019**
(21) Numéro de dépôt: 16736101.3
(22) Date de dépôt: 05.07.2016
(51) Int. Cl.: F28F 9/16, F16L 41/00, F28D 20/02

(54) **FAISCEAU D'ECHANGE THERMIQUE DE STOCKAGE POUR BATTERIE THERMIQUE DE STOCKAGE COMPRENANT DES MICRO TUBES**
WÄRMETAUSCHERSPEICHERBÜNDEL FÜR EINE WÄRMESPEICHERBATTERIE MIT MIKRORÖHRCHEN
HEAT-EXCHANGE STORAGE BUNDLE FOR HEAT-STORAGE BATTERY, COMPRISING MICROTUBES

(30) Priorité: 07.07.2015 FR 1556446
(43) Date de publication de la demande: 16.05.2018
(73) Titulaire: Valeo Systemes Thermiques, 78320 Le Mesnil Saint Denis (FR)
(72) Inventeur: MONNET, Véronique, 53810 Change (FR); BOISSELLE, Patrick, 53000 Laval (FR); AZZOUZ, Kamel, 75012 Paris (FR)
(74) Mandataire: Tran, Chi-Hai
(86) Numéro de dépôt international: PCT/EP2016/065874
(87) Numéro de publication internationale: WO 2017/005750

(56) Documents cités:
- WO-A1-2004/040222
- DE-A1-102011 086 605
- US-A- 5 036 904
- US-A1- 2011 081 134

## Description

La présente invention concerne le domaine des batteries thermiques de stockage utilisant pour éléments d'échange de chaleur un faisceau de micro tubes pour stocker et libérer une quantité déterminée de chaleur, les micro-tubes comportant en leur sein un matériau à changement de phase (MCP). Ces batteries de stockage sont particulièrement adaptées pour une utilisation dans les véhicules automobile.

En particulier, l'invention concerne l'élément de fixation des micro tubes composant le faisceau d'échange à un collecteur ainsi que leur fermeture étanche. Un faisceau d'échange thermique de stockage pour batterie thermique de stockage selon le préambule de la revendication 1 est connu de WO 2004/040222.

Une batterie thermique est, par exemple, utilisée pour diffuser de la chaleur, via le système de chauffage, dans l'habitacle d'un véhicule automobile hybride, c'est-à-dire combinant un moteur fonctionnant grâce à l'énergie thermique et à l'énergie électrique. Par ailleurs, ce type de batterie thermique peut servir à préchauffer un fluide caloporteur, l'huile du moteur ou l'huile de la boîte de vitesse automatique, et ce avant le démarrage à froid dudit véhicule automobile.

Lors de l'utilisation d'une batterie thermique avec un véhicule électrique, le chargement de ladite batterie thermique est, en principe, réalisé lors du chargement de la batterie électrique. La batterie électrique sert au déplacement dudit véhicule électrique. Lors d'un déplacement dudit véhicule électrique, l'énergie thermique stockée dans la batterie thermique peut être utilisée lors de la mise en marche du système de chauffage au sein de l'habitacle du véhicule automobile. Le système de chauffage pour chauffer l'habitacle d'un véhicule automobile fonctionne à l'aide d'un fluide tel qu'un fluide caloporteur. Afin de chauffer l'habitacle du véhicule automobile, la batterie thermique réchauffe le fluide caloporteur avant son passage à l'intérieur du radiateur de chauffage qui permet de transférer le fluide caloporteur à l'intérieur de l'habitacle. L'énergie fournie par la batterie thermique permet donc d'économiser l'énergie correspondante stockée par la batterie électrique. En d'autres termes, on supprime l'impact du fonctionnement du chauffage au sein de l'habitacle sur l'autonomie du véhicule électrique.

L'utilisation d'une batterie thermique avec un véhicule hybride permet de stocker l'énergie thermique lors du chargement de la batterie électrique. D'autre part, la batterie thermique peut être rechargée via le fluide caloporteur, lorsque le moteur du véhicule hybride bascule en mode thermique.

Lors de l'utilisation d'une batterie thermique avec un véhicule muni d'un moteur à combustion interne, l'énergie thermique stockée à l'intérieur de la batterie thermique provient de l'énergie produite lors d'un précédent roulage dudit véhicule. Les fluides utilisés pour refroidir le moteur ou la boîte de vitesse automatique par exemple, peuvent être utilisés pour charger la batterie thermique. En effet, l'huile de la boîte de vitesse automatique rejette, dans un usage classique, une quantité déterminée de chaleur. Ladite quantité déterminée de chaleur peut être stockée dans une batterie thermique et ensuite utilisée lors du démarrage du véhicule automobile pour permettre l'augmentation rapide de la température de l'huile de moteur et/ou de l'huile de la boîte de vitesse automatique, réduisant ainsi les frottements dus à la viscosité de ladite huile. En effet, la viscosité de l'huile est d'autant plus élevée que la température est basse. Si la température de l'huile n'augmente pas rapidement, notamment concernant l'huile de la boîte de vitesse automatique, les frottements entraînent une surconsommation de carburant et d'émissions de CO2 lors des premières minutes de l'utilisation du véhicule. La batterie thermique peut être utilisée dans des circuits d'huile de boîte de vitesse automatique, de fluide caloporteur, ou d'huile de moteur.

Dans la conception des batteries thermiques, il est déjà connu d'utiliser des micro tubes en matériau synthétique pour encapsuler un matériau à changement de phase (MCP) afin de pouvoir stocker et libérer une quantité déterminée de chaleur. Il est nécessaire de fermer les extrémités des micro tubes de manière étanche et durable pour garantir qu'il n'y ait pas de mélange du MCP avec le fluide caloporteur d'échange.

L'art antérieur divulgue une solution de fermeture des micro tubes par soudage. Un des inconvénients de cette solution est qu'il est nécessaire d'utiliser une certaine hauteur du micro tube pour garantir une bonne tenue de la soudure sous toutes les conditions d'utilisation de la batterie thermique. La partie utile restante pour le MCP s'en trouve alors réduite, ce qui entraine une moindre efficacité de la batterie thermique. De plus, ce procédé est relativement long pour assurer la fusion lors de la soudure du tube plastique. En effet, la capacité de la batterie directement liée au volume de stockage de MCP. De plus, ce procédé est relativement long pour assurer la fusion lors de la soudure du tube plastique.

Il existe également des solutions à base de colle. Le collage, à l'aide de résine, présente des inconvénients : le temps de polymérisation est long, les procédés de mise en œuvre sont très contraignants. De plus, les conditions d'utilisation de la batterie thermique en milieu automobile ne sont pas très adaptées à ces solutions. Les conditions de température, les chocs thermiques, les conditions d'échange avec des fluides à base d'eau glycolée, d'huile sont incompatibles avec la tenue mécanique et/ou chimique des résines.

L'utilisation de bouchon mécanique présente lui aussi des inconvénients. L'étanchéité n'étant bien souvent pas garantie à 100%, des mélanges de MCP avec un fluide caloporteur tel que de l'huile de boîte de vitesse sont possibles, ce qui peut engendrer des dommages graves au système de transmission d'un véhicule. Un autre problème qui se pose avec la solution de bouchon mécanique est le risque qu'il soit expulsé lors du changement de phase du MCP. En effet, lors de son changement de phase, le MCP s'expanse et la pression interne dans le micro tube augmente, ce qui peut aboutir à l'expulsion du bouchon.

L'utilisation de bouchons expansés dans des collecteurs est une solution adaptée mais qui nécessite de réaliser le montage lors de l'assemblage de chacun des micro tubes sur la batterie même.

Un des buts de la présente invention est donc de remédier au moins partiellement aux inconvénients de l'état de la technique en proposant un faisceau dans lequel les micro tubes sont fermés de manière étanche par un élément de fixation assurant une bonne tenue mécanique de la fermeture des micro tubes et de leur fixation sur le collecteur dans le temps.

La présente invention concerne donc un faisceau d'échange thermique de stockage pour batterie thermique de stockage comprenant des micro tubes 1 et un collecteur, lesdits micro tubes comprenant en leur sein un matériau adapté pour stocker et libérer une quantité déterminée de chaleur, au moins un micro tube étant fermé par un élément de fixation mécanique au collecteur. Ledit élément de fixation mécanique plaque une partie du micro tube contre le collecteur.

Selon un aspect de l'invention, le matériau adapté pour stocker et libérer une quantité déterminée de chaleur comprend un matériau à changement de phase (MCP).

Selon un autre aspect de l'invention, l'élément de fixation mécanique maintient le micro tube au collecteur par expansion d'une partie du micro tube contre une face du collecteur, une autre partie de l'élément mécanique étant en prise sur la face opposée du collecteur.

Selon un autre aspect de l'invention, ledit élément de fixation mécanique comprend un rivet.

Selon un autre aspect de l'invention, ledit rivet est un rivet aveugle étanche.

Selon un autre aspect de l'invention, chaque micro tube est fermé par un élément de fixation mécanique au collecteur.

Selon un autre aspect de l'invention, les micro tubes sont disposés les uns parallèles aux autres, le pas d'assemblage des micro tubes étant assuré par ledit collecteur.

L'invention concerne également une batterie thermique comprenant un faisceau d'échange.

Les but, objet et caractéristiques de la présente invention ainsi que ses avantages apparaîtront plus clairement à la lecture de la description ci-dessous, des modes de réalisation préférés faisant référence aux dessins dans lesquels :
- la figure la montre une vue, en coupe, d'un micro tube d'un faisceau d'échange thermique comprenant un élément de fixation à un collecteur, selon un premier mode de réalisation,
- la figure 1b est une vue agrandie du détail 9 de la figure la, avant fixation de l'élément de fixation au collecteur
- la figure 1c est une réalisation avantageuse du premier mode de réalisation
- la figure 2 montre une vue, en coupe, d'un micro tube d'un faisceau d'échange thermique comprenant un élément de fixation à un collecteur selon un deuxième mode de réalisation,
- la figure 3a est une représentation d'une vue, en coupe, d'un faisceau de micro tubes,
- la figure 3b est une vue agrandie d'une partie du faisceau du la figure 3a.

La description détaillée ci-après a pour but d'exposer l'invention de manière suffisamment claire et complète, notamment à l'aide d'exemples, mais ne doit en aucun cas être regardée comme limitant l'étendue de la protection au mode de réalisation particulier et aux exemples présentés ci-après.

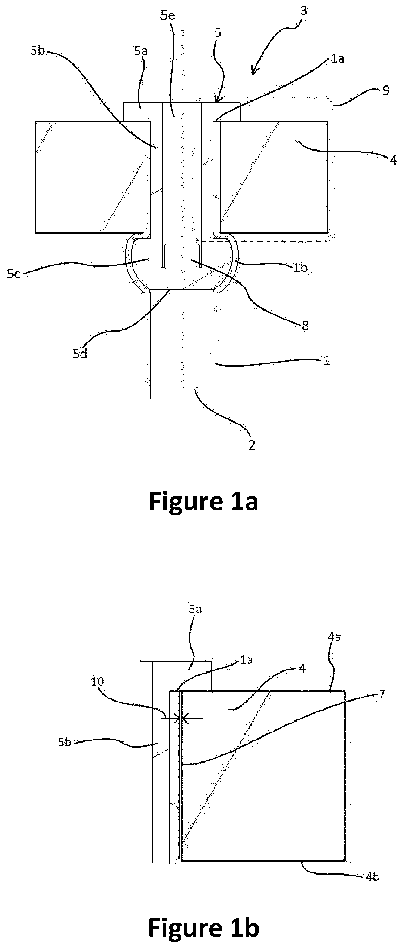

Les figures 1a et 1b montrent une vue, en coupe, d'un micro tube d'un faisceau d'échange thermique comprenant un élément de fixation à un collecteur selon un premier mode de réalisation de l'invention, l'élément de fixation fermant le micro tube de manière étanche.

Le micro tube 1 est un tube cylindrique en matériau synthétique, particulièrement en matériau plastique de forme longitudinale, c'est à dire que sa longueur est bien plus importante que son diamètre. Sa dénomination tient du fait de ses faibles dimensions en comparaison aux dimensions habituellement rencontrées dans le domaine des véhicules automobiles. En effet, un tel micro tube a un diamètre de l'ordre de 3 à 6 millimètres et en particulier 4 millimètres et une longueur comprise entre 100 et 300 millimètres.

Le micro tube 1 comprend un matériau à changement de phase (MCP) 2.

L'élément de fixation 3 au collecteur 4 comprend deux fonctions non dissociables, la fermeture du micro tube 1 et sa fixation sur un collecteur 4. Ainsi, sur la figure la, l'élément de fixation 3 comporte un rivet 5 aveugle qui obture le micro tube 1 et le fixe au collecteur 4.

La figure la est une représentation du micro tube 1, après l'opération de rivetage du rivet 5 sur le collecteur 4.

Le rivet 5 aveugle est un corps creux comprenant une collerette 5a cylindrique à base ronde et un tube 5b cylindrique à base ronde, la collerette 5a et le tube 5b étant accolés et centrés selon un même axe. Le rivet 5 comprend un trou cylindrique 5e centré sur l'axe du rivet 5 et qui traverse entièrement la collerette 5a et la majeure partie du tube 5b. Le tube 5b est fermé en son extrémité libre 5d. Il n'est pas percé de bout en bout, c'est en cela que le rivet 5 est qualifié d'aveugle.

Le collecteur 4 comprend une face externe 4a et une face interne 4b. Il est percé d'au moins un trou 7 traversant. Un micro tube 1 est inséré dans le trou 7 de manière à ce que l'extrémité la du micro tube 1 soit sensiblement au niveau de la face externe 4a du collecteur. Avantageusement, l'extrémité la du micro tube 1 dépasse très légèrement du collecteur 4 sur sa face externe 4a.

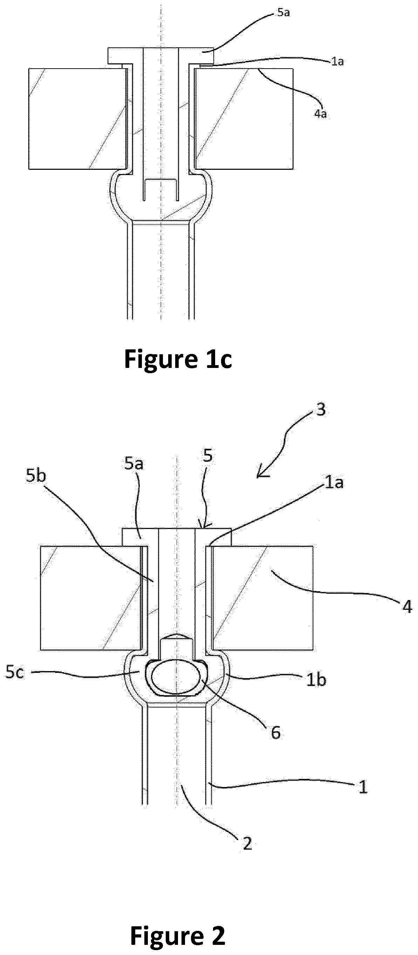

Lorsque le rivet 5 est introduit dans le micro tube 1, la collerette 5a du rivet 5 est en prise sur la face externe 4a du collecteur 4. Avantageusement, comme montré sur la figure 1c, si l'extrémité la du micro tube 1 dépasse du collecteur 4 sur sa face externe 4a avant introduction du rivet 5, alors, lorsque le rivet 5 est introduit dans le micro tube 1, la collerette 5a écrase la partie saillante de l'extrémité la du micro tube 1, ce qui renforce l'étanchéité entre le rivet 5 et le micro tube 1. L'extrémité la du micro tube 1 se retrouve plaquée par la collerette 5a du rivet 5 contre la face externe 4a du collecteur 4.

La fixation du rivet 5 sur le collecteur 4 s'effectue par opération de rivetage. Le rivet 5 avant rivetage comporte un clou dans le trou 5e du rivet 5, la tête de ce clou étant située au fond du trou 5e et solidaire du rivet 5, la tige du clou dépassant du trou 5e. Pendant l'opération de rivetage, une pince à riveter tire sur la tige du clou, la tête du clou pénètre le tube 5b du rivet 5, déformant ainsi fortement la partie 5c du tube 5b située sous le collecteur 4 ainsi que la partie 1b du micro tube 1. Sur la figure 1, on constate que la partie 5c du rivet 5 est bombée et en prise sur la face 4b du collecteur 4. La partie du micro tube 1 qui se trouve dans le collecteur 4 se retrouve prise en sandwich entre la collerette 5a du rivet 5 qui est en prise sur la face 4a du collecteur et l'expansion 1b du micro tube 1 qui est prise sur la face opposée 4b du collecteur 4. Le rivet maintient donc le micro tube 1 au collecteur par l'expansion 1b du micro tube 1 contre la face 4b du collecteur, la collerette 5a étant en prise sur la face opposée 4a du collecteur.

Selon un premier mode de réalisation, le diamètre extérieur du micro tube 1 avant expansion du rivet 5 est inférieur d'au moins un dixième de millimètre et de préférence plusieurs dixièmes de millimètre au diamètre du trou 7 dans le collecteur 4. Ce jeu 10, visible sur la figure 1b, entre le collecteur 4 et le micro tube 1 permet que la fin d'opération de rivetage expanse également la partie 5b du rivet 5 localisée dans le collecteur 4, la partie du micro tube 1 associée étant expansée également, contre les parois du trou 7 du collecteur 4. Ainsi, par cette opération de rivetage, le rivet 5 plaque au moins une partie du micro tube 1 localisée dans le trou 7 du collecteur 4 contre le collecteur 4.

Conformément à la représentation sur la figure la, le clou s'arrache totalement, laissant dans le fond du trou 5e une part de matière 8, seule trace restante de la présence du clou dans le rivet 5.

Selon un deuxième mode de réalisation, visible sur la figure 2, le jeu 10 entre le collecteur 4 et le micro tube 1 avant expansion est inférieur à un dixième de millimètre. Dans ce cas, la fin d'opération du rivetage se passe différemment. La tête du clou se bloque contre la paroi 4b du collecteur 4, la tige du clou se casse automatiquement sous sa tête lorsque le degré maximum de traction de la tige est atteint, laissant la tête du clou 6 à l'intérieur du rivet 5. Le jeu 10 reste donc équivalent après l'opération de rivetage.

Le seuil de un dixième de millimètre du jeu 10 est donné à titre indicatif et dépend du type de rivet et de l'opération de rivetage (force de traction).

Avantageusement, le rivet 5 est aveugle, ce qui permet d'assurer l'étanchéité du rivet 5 dans le micro tube 1 par rapport au MCP 2 contenu dans ce micro tube 1.

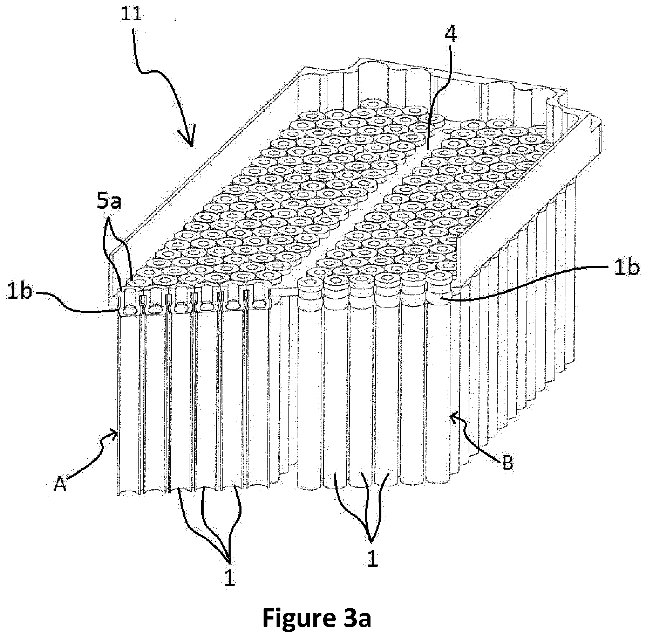

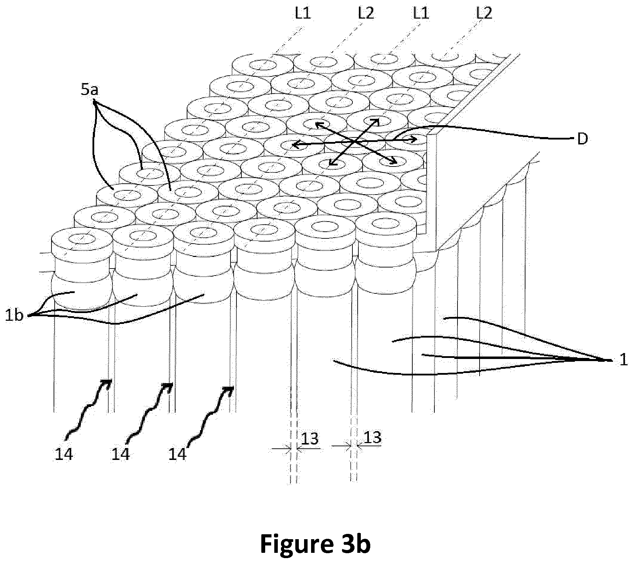

Les figures 3a et 3b montrent une vue en perspective d'un faisceau d'échange 11 de micro tubes 1, chaque micro tube 1 comprenant un élément de fixation 3 au collecteur 4 tel que décrit précédemment et illustré en figure 1a et 2.

Dans le faisceau d'échange 11, les micro tubes sont disposés les uns parallèles aux autres à l'intérieur d'une boîte de réception d'une batterie thermique. Les micro tubes 1 sont localisés dans des trous 7 percés dans le collecteur 4.

Sur les figures 3a et 3b, les micro tubes sont accolés par leurs éléments de fixation 3, c'est-à-dire les collerettes 5a des rivets 5. Ils sont agencés en quinconce les uns par rapport aux autres selon une alternance de lignes L1 et L2 parallèles entre elles de sorte que les micro tubes adjacents sont équidistants les uns des autres d'une distance D dans toutes les directions. Les micro tubes des lignes L1 sont disposés selon un premier quadrillage, les micro tubes des lignes L2 selon un deuxième quadrillage, les deux quadrillages étant identiques mais décalés l'un par rapport à l'autre. Cet agencement est défini par la localisation des trous 7 dans le collecteur 4.

Sur les figures 3a et 3b, le diamètre maximum du micro tube 1 sur l'expansion 1b est sensiblement égal au diamètre extérieur de la collerette 5a du rivet 5. Il en résulte que les micro tubes 1 sont accolés à la fois par leur collerette 5a des rivets 5 et aux expansions 1b des micro tubes 1.

Le diamètre extérieur des micro tubes 1 aux endroits remplis de MCP 2 étant inférieur au diamètre extérieur des micro tubes 1 en l'expansion 1b et au diamètre extérieur de la collerette 5a du rivet 5, il en résulte un espace entre les micro tubes 1 qui permet à un fluide 14 de circuler. Sur la figure 3b, cet espace est défini par un espacement 13 entre deux parois externes de micro tubes adjacents, cet espacement étant mesuré transversalement aux axes des micro tubes 1.

Sur les figures 3a et 3b, le pas d'assemblage D des micro tubes 1 est défini par la collerette 5a du rivet 5 des micro tubes fermés, cela correspond au diamètre de la collerette 5a du rivet 5. Ce pas d'assemblage D est également égal au diamètre maximal de l'expansion 1b du micro tube 1. Le pas d'assemblage étant dans tous les cas défini par la localisation des trous 7 du collecteur 4, D correspond également à la distance de centre de perçage entre deux trous 7.

Ce mode de réalisation est un exemple. Les micro tubes 1 étant fixé mécaniquement au collecteur 4 par les rivets 5, il n'est pas nécessaire pour la bonne tenue mécanique du faisceau 11 qu'ils soient accolés. Le mode de réalisation présenté est la forme de réalisation la plus compacte du faisceau 11, le but étant de densifier le nombre de micro tubes 1, c'est-à-dire la masse de MCP 2. Cependant, il peut être souhaitable d'espacer les micro tubes 1 d'un plus grand espacement 13 pour des raisons de performances d'échange thermique.

De même, il n'est pas nécessaire que le diamètre des expansions 1b soit égal au diamètre extérieur des collerettes 5a. Dans ce cas, le mode de réalisation le plus compact correspondra à l'accolement des micro tubes 1 soit par leurs expansions 1b, soit par leurs collerettes 5a, selon les diamètres de ces deux éléments.

L'espacement 13 entre deux parois externes de micro tubes 1 adjacents est par exemple de l'ordre de 0.6 millimètre pour permettre une bonne circulation du fluide entre les micro tubes 1 et bénéficier d'une solution de faisceau compacte. Cette valeur est valable notamment pour un micro tube 1 de diamètre 4 millimètres et un pas d'assemblage D de 4.6 millimètres des micro tubes 1.

Un micro tube 1 peut être fermé et fixé au collecteur en sa première extrémité par un élément de fixation 3 tel que décrit dans l'invention et de manière différente ou similaire en sa deuxième extrémité.

Il est même envisageable que dans un faisceau d'échange 11, certains micro tubes ne soient pas fixés au collecteur par un élément de fixation 3 tel que décrit dans l'invention.

## Revendications

1. Faisceau d'échange thermique de stockage (11) pour batterie thermique de stockage comprenant des micro tubes (1) et un collecteur (4), lesdits micro tubes (1) comprenant en leur sein un matériau (2) adapté pour stocker et libérer une quantité déterminée de chaleur, **caractérisé en ce que** au moins un micro tube (1) est fermé par un élément de fixation mécanique (3) au collecteur (4), **caractérisé en ce que** ledit élément de fixation mécanique (3) plaque une partie du micro tube (1) contre le collecteur (4).

2. Faisceau d'échange thermique de stockage selon la revendication 1 **caractérisé en ce que** le matériau (2) adapté pour stocker et libérer une quantité déterminée de chaleur comprend un matériau à changement de phase (MCP).

3. Faisceau d'échange thermique de stockage selon l'une quelconque des revendications 1 à 3 **caractérisé en ce que** l'élément de fixation mécanique (3) maintient le micro tube (1) au collecteur (4) par expansion d'une partie (1b) du micro tube (1) contre une face (4b) du collecteur (4), une autre partie de l'élément mécanique étant en prise sur la face (4a) opposée du collecteur.

4. Faisceau d'échange thermique de stockage selon l'une quelconque des revendications 1 à 4 **caractérisé en ce que** ledit élément de fixation mécanique (3) comprend un rivet (5).

5. Faisceau d'échange thermique de stockage selon la revendication 5 **caractérisé en ce que** ledit rivet (5) est un rivet aveugle étanche.

6. Faisceau d'échange thermique de stockage selon l'une quelconque des revendications précédentes **caractérisé en ce que** chaque micro tube (1) est fermé par un élément de fixation mécanique (3) au collecteur.

7. Faisceau d'échange thermique de stockage selon l'une quelconque des revendications précédentes **caractérisé en ce que** les micro tubes (1) sont disposés les uns parallèles aux autres, le pas d'assemblage (D) des micro tubes étant assuré par ledit collecteur (4).

8. Batterie thermique comprenant un faisceau d'échange (11) selon l'une quelconque des revendications précédentes.

## Patentansprüche

1. Wärmetauscher-Speicherbündel (11) für eine Wärmespeicherbatterie, welche Mikrorohre (1) und einen Endboden (4) umfasst, wobei die Mikrorohre (1) in ihrem Inneren ein Material (2) umfassen, das geeignet ist, eine bestimmte Menge an Wärme zu speichern und freizusetzen, **dadurch gekennzeichnet, dass** wenigstens ein Mikrorohr (1) durch ein Element zur mechanischen Befestigung (3) am Rohrboden (4) verschlossen ist, **dadurch gekennzeichnet, dass** das mechanische Befestigungselement (3) einen Teil des Mikrorohres (1) an den Endboden (4) anpresst.

2. Wärmetauscher-Speicherbündel nach Anspruch 1, **dadurch gekennzeichnet, dass** das Material (2), das geeignet ist, eine bestimmte Menge an Wärme zu speichern und freizusetzen, ein Phasenwechselmaterial (Phase Change Material, PCM) umfasst.

3. Wärmetauscher-Speicherbündel nach einem der Ansprüche 1 bis 3, **dadurch gekennzeichnet, dass** das mechanische Befestigungselement (3) das Mikrorohr (1) durch Aufweitung eines Teils (1b) des Mikrorohres (1) an einer Seite (4b) des Endbodens (4) am Endboden (4) hält, wobei ein anderer Teil des mechanischen Elements an der gegenüberliegenden Seite (4a) des Endbodens angreift.

4. Wärmetauscher-Speicherbündel nach einem der Ansprüche 1 bis 4, **dadurch gekennzeichnet, dass** das mechanische Befestigungselement (3) einen Niet (5) umfasst.

5. Wärmetauscher-Speicherbündel nach Anspruch 5, **dadurch gekennzeichnet, dass** der Niet (5) ein dichter Blindniet ist.

6. Wärmetauscher-Speicherbündel nach einem der vorhergehenden Ansprüche, **dadurch gekennzeichnet, dass** jedes Mikrorohr (1) durch ein mechanisches Befestigungselement (3) am Endboden verschlossen ist.

7. Wärmetauscher-Speicherbündel nach einem der vorhergehenden Ansprüche, **dadurch gekennzeichnet, dass** die Mikrorohre (1) parallel zueinander angeordnet sind, wobei das Rastermaß (D) der Anordnung der Mikrorohre durch den Endboden (4) sichergestellt wird.

8. Thermische Batterie, welche ein Wärmetauscherbündel (11) nach einem der vorhergehenden Ansprüche umfasst.

## Claims

1. Heat-exchange storage bundle (11) for a heat-storage battery comprising microtubes (1) and a collector (4), said microtubes (1) comprising within them a material (2) suitable for storing and releasing a given quantity of heat, **characterized in that** at least one microtube (1) is closed, by a mechanical fastening element (3), onto the collector (4), **characterized in that** said mechanical fastening element (3) clamps part of the microtube (1) against the collector (4).

2. Heat-exchange storage bundle according to Claim 1, **characterized in that** the material (2) suitable for storing and releasing a given quantity of heat comprises a phase-change material (PCM).

3. Heat-exchange storage bundle according to any one of Claims 1 to 3, **characterized in that** the mechanical fastening element (3) holds the microtube (1) on the collector (4) by expansion of part (1b) of the microtube (1) against a face (4b) of the collector (4), another part of the mechanical element being in engagement on the opposite face (4a) of the collector.

4. Heat-exchange storage bundle according to any one of Claims 1 to 4, **characterized in that** said mechanical fastening element (3) comprises a rivet (5).

5. Heat-exchange storage bundle according to Claim 5, **characterized in that** said rivet (5) is a sealed blind rivet.

6. Heat-exchange storage bundle according to any one of the preceding claims, **characterized in that** every microtube (1) is closed, by a mechanical fastening element (3), onto the collector.

7. Heat-exchange storage bundle according to any one of the preceding claims, **characterized in that** the microtubes (1) are arranged parallel to one another, the assembly spacing (D) of the microtubes being set by said collector (4).

8. Heat-storage battery comprising a heat-exchange bundle (11) according to any one of the preceding claims.
